# EUROPEAN PATENT SPECIFICATION

(11) **EP 0 404 315 B1**
(45) Date of publication and mention of the grant of the patent: **14.12.1994**
(21) Application number: 90304578.9
(22) Date of filing: 26.04.1990
(51) Int. Cl.: C09J 175/04, C08G 18/10, C08G 18/32, C09K 3/10, C09D 175/04

(54) **Chemically-curing, two-part polyurethane compositions**
Chemisch härtende zweiteilige Polyurethan-Zusammensetzungen
Compositions de polyuréthane en deux parties chimiquement durcissables

(30) Priority: 20.05.1989 GB 8911669
(43) Date of publication of application: 27.12.1990
(73) Proprietor: BOSTIK LIMITED, Leicester LE4 6BW (GB); BOSTIK FRANCE SA, F-94203 Ivry-sur-Seine (FR); Bostik GmbH, D-61440 Oberursel (DE); BOSTIK AB, S-25229 Helsingborg (SE)
(72) Inventor: Piestert, Gerhard, D-6870 Schwetzingen (DE); Haar, Wolfgang, D-4322 Sprockhovel 2 (DE)
(74) Representative: Dubost, Thierry

(56) References cited:
- DE-A- 2 037 458
- FR-A- 2 303 844

## Description

The present invention relates to chemically-curing, two-part polyurethane compositions which can be used as adhesive, sealant, moulding or coating compositions.

Such two-part polyurethane compositions comprise Part A which comprises a prepolymer with terminal isocyante groups and which is mixed with Part B which comprises water or a water-containing composition.

Such two-part polyurethane adhesive and sealant compositions are well-known in which Part A contains isocyanate and Part B contains polyol or polyamine. In order to obtain a satisfactory uniform reaction product it is necessary to use stoichiometrical amounts of Part A and Part B which must be precisely measured and then mixed homogeneously. Additionally, the moisture content of these compositions must be carefully controlled, and the rate of cure limited; since too high water content leads to foaming of the mixture due to reaction of isocyante with the water, often leading to CO₂ blistering. Effective production and application of these conventional two-part polyurethane compositions often requires complex and expensive metering and mixing equipment.

Although a one-part composition, FR-A-2 303 844 discloses a polyurethane prepolymer containing terminal isocyante groups which is further a co-polymer of a polyhydroxyl compound and a polyether. This patent further discloses that curing of the prepolymer may be effected by the addition of water which causes the release of catalysts, promoters and/or accelerators from molecular sieves.

It is an object of the present invention to provide a two-part polyurethane composition which can be cured at a reasonbly fast rate without CO₂ blister formation.

It is another object of the invention to provide a chemically-curing two-part polyurethane composition comprising Part A which comprises a prepolymer with terminal isocyanate groups and which is mixed with Part B which comprises water or a water-containing composition characterised in that Part A is filled with a molecular sieve of pore size 4 Å to 5 Å free from adsorbed water and loaded with a primary or secondary amine with 2 or more functionalities.

When mixing of Parts A and B brings water into contact with Part A, rapid desorption of the polyamine takes place which can then react rapidly with the isocyanate groups.

The molecular sieve used in the present invention may be loaded with up to 25 wt% of amine and it is preferred to load the amine to at least 50% and preferably 75% of the capacity of the molecular sieve. Up to 90% of the capacity of the molecular sieve could be amine-loaded without showing storage stability problems. The polyurethane compositions of the invention show remarkable stability, both at room temperature and at elevated temperatures. Indeed, curing of Part A by thermal desorption does not take place; after heating to 120°C for four hours, no increase in viscosity is observed.

The present invention provides a two-part polyurethane composition which quickly cures to an acceptable product, with a high degree of uniformity without requiring accurate metering in stoichiometric proportions and homogeneous mixing. The system thus provided needs only very simple mixing and application equipment.

Perhaps surprisingly, it is also found that water can be added to a Part A according to the invention in substantial excess and with incomplete (not homogeneous) mixing and yet the mixture still cures rapidly to a CO₂ blister-free product.

It was known to use molecular sieves loaded with various reactive materials, including amines as well as peroxides, hydrogensulphides etc., as reactive components of e.g. lacquer systems or rubber components. Amine-loaded molecular sieves have also been used as secondary accelerators in neoprene, polyacrylontrile and polybutadiene formulations. However, the amines in these cases are tertiary amines. Furthermore, commercially available amine-loaded molecular sieves have not been found suitable for use in the present invention since the resulting blends have been found not to be stable at elevated temperature. It is thought that this may possibly be due to the fact that these commercial amine-loaded molecular sieves may contain significant amounts of water which could interfere with the reaction and weaken the adsorption of the amine.

As has been said, accurate metering and mixing of Part A and Part B is no longer necessary in the present invention. This greatly simplifies the application of the compositions, Part B may be applied either in excess - without foaming or formation of CO₂ blisters - or in less than stoichiometric proportions - when ambient humidity completes the cure. Indeed, in certain circumstances, Part A may be applied alone and allowed to cure with ambient moisture from the air or from the substrate to be bonded. This may be done, for example, to purge a mixer at the end of an application.

The pot life of such compounds may be varied within certain limits by the amount of water added and the quality of the mixture. If for example mixing is performed very carefully, the composition may be cured after only 5 minutes. On the other hand, if mixing is performed less thoroughly, pot life may be 15 minutes or longer.

Two-part polyurethane compounds according to this invention also permit the use of high concentrations of isocyanate in Part A, a pre-requisite in many applications in order to obtain satisfactory adhesive and cohesive properties.

In addition, the use of amine-loaded molecular sieves allows combination with aliphatic isocyanates which are of low reactivity and which, even in the presence of suitable catalysts, react only slowly with water, but rapidly enough with polyamines. Formulations without or with low concentrations of catalyst reveal better hydrolytic and thermal stability.

The isocyanate-terminated prepolymers of Part A may be derived from polyols such as polyester polyols, polyether polyols, polybutadiene polyols, polyacrylate polyols, polyisoprene polyols and others. The polyols are reacted with excess isocyanate, leading to terminal isocyanate groups which are available for further reactions. Representative examples of isocyanates are 2.4-or 2.6 tolylene diisocyanate (TDI), 4.4′-diphenylene methane diisocyanate (MDI), 4.4′-dicyclohexyl, methane diisocyanate (HMDI), isophorone diisocyanate (IPDI) etc.

Molecular sieves of pore sizes 4 Å and 5 Å have been effective in all tests.

Representative examples of polyamine to be absorbed on the molecular sieves are ethylene diamine, propylene diamine, diethylene triamine, triethylene tetramine, etc.

In order that the invention may be better understood preferred Examples will now be described in greater detail.

### EXAMPLES

### A. Preparation of amine-loaded molecular sieve

(a) 3g ethylene diamine were added to 20g molecular sieve (4Å) in 50g dry 'Mesamoll' - alkyl sulphonic acid ester of phenol - (Registered Trade Mark - Bayer) (corresponding to approx. 75% saturation). After 10 days the free amine remaining in the 'Mesamoll' was determined. This indicated that 98.7% of the polyamine was adsorbed.
(b) 3.6g ethylene diamine were added to 20g molecular sieve (5Å) in 50g dry 'Mesamoll' (corresponding to approx. 90% saturation). After 2 weeks the free amine remaining in the 'Mesamoll' was determined. This indicates that 98.3% of the polyamine was adsorbed.

It is not necessary to separate the thus-loaded molecular sieves from the 'Mesamoll'; the suspensions may be used as such in the preparation of the polyurethane compositions.

### B. Formulation with prepolymer

### EXAMPLE 1

### Preparation of Part A (1)

25g 'Mesamoll' and 15.0g MDI were added to 18.25g of the suspension from (a). The mixture was stirred vigorously for 10 minutes. Then 100g 'Desmophen' 1900 U - polyether diol of polypropylene oxide (equivalent weight about 1000)
- (Registered Trade Mark - Bayer) and 0,1% dibutyltin dilaurate were added and the mixture kept at 80°C for 2 hours. The isocyanate content of the resulting prepolymer was 21 mVal.

### Production of polyurethane

Pure water was used as Part B(1).
After mixing 10g water (50 times the stoichiometric amount) into the above Part A(1) formulation, the product cured within approx. 10 minutes without CO₂ blister formation.

In comparison, curing of a similar composition without the amine-loaded molecular sieve took more than two hours and produced severe foaming.

### EXAMPLE 2

### Preparation of Part A (2)

15.62g MDI were added to 29.44g of suspension (b) and 13.81g 'Mesamoll'. The mixture was stirred vigorously for 10 minutes. Then 100g 'Desmophen' 1910 U - polyether triol of polypropylene oxide - (equivalent weight about 1300) - and 0.1% dibutyltin dilaurate were added and the mixture kept at 80°C for 2 hours. The isocyanate content of the resulting prepolymer was 44 mVal.

### Production of polyurethane

Pure water was again used as Part B(2)
After mixing 20g water (50 times the stoichiometric amount) into the above Part A(2) formulation, the product cured within approx. 10 minutes without CO₂ blister formation.

### EXAMPLE 3

### Preparation of Part A(3)

Part A(3) was prepared as described in EXAMPLE 2 above.

### Preparation of Part B(3)

A waterpaste was prepared by dispersing 15g water and 3g 'Aerosil' 200 (Registered Trade Mark - Degussa) in 70g 'Mesamoll' and the dispersion thoroughly mixed during addition of 15g carbon black.

### Production of polyurethane

5.3g of the Part B(3) (i.e. twice the stoichiometre amount) was mixed with the part A(3), using a ten-element static mixer. The mixture gelled within 5 minutes, without CO₂ blister formation, and was fully cured after about 60 minutes.

A comparative composition prepared using a Part A without the amine-loaded molecular sieve together with Part B(3) when mixed by a ten element static mixer resulted only in a foaming mixture.

### EXAMPLE 4

Part A(4) was also prepared as described in EXAMPLE 2 above and Part B(4) was prepared as described in Example 3 above.

### Production of polyurethane

2g of Part B(4) (75% of the stoichiometre amount) was mixed with the Part A(4) prepared as described in EXAMPLE 2, again using a ten-element static mixer. The resulting mixture gelled after 20 minutes, and there was no foaming or CO₂ blister formation. Full cure, with the aid of ambient moisture, was achieved within one day.

## Claims

1. A chemically-curing two-part polyurethane composition comprising Part A which comprises a prepolymer with terminal isocyanate groups and which is mixed with Part B which comprises water or a water-containing composition characterised in that Part A is filled with a molecular sieve of pore size 4 Å to 5 Å, free from adsorbed water and loaded with a primary or secondary amine urethane chain extender with 2 or more reactive functionalities, in an amount such that the loaded amine reacts rapidly with the isocyanate groups of the prepolymer.

2. A two-part polyurethane composition according to claim 1, wherein the molecular sieve is loaded with amine to at least 50 % of its capacity.

3. A two-part polyurethane composition according to claim 2, wherein the molecular sieve is loaded with amine to at least 75 % of its capacity.

4. A two-part polyurethane composition according to claim 2 or claim 3 wherein the molecular sieve is loaded with amine up to 90 % of its capacity.

5. A two-part polyurethane composition according to any of claims 1 to 4, wherein Part A and Part B are mixed in non-stoichiometric proportions.

6. A two-part polyurethane composition according to any of claims 1 to 5, wherein the primary or secondary amine urethane chain extender with 2 or more reactive functionalities is selected from ethylene diamine, propylene diamine, diethylene triamine and triethylene tetramine.

7. A two-part polyurethane composition according to any of claims 1 to 6, wherein the prepolymer with terminal isocyanate groups is derived from a polyester polyol, a polyether polyol, a polybutadiene polyol, a polyacrylate polyol or a polyisoprene polyol.

8. A two-part polyurethane composition according to any of claims 1 to 7, wherein the isocyanate is selected from 2.4 and 2.6 tolylene diisocyanate, 4.4'-diphenylene methane diisocyanate, 4.4'-dicyclohexyl methane diisocyanate and isophorone diisocyanate.

## Patentansprüche

1. Chemisch härtende zweiteilige Polyurethanzusammensetzung bestehend aus Teil A, der ein Präpolymer mit Isocyanatendgruppen enthält und mit Teil B, der Wasser oder eine wasserhaltige Zusammensetzung enthält, vermischt wird, dadurch gekennzeichnet, daß Teil A mit einem von adsorbiertem Wasser freien Molekularsieb einer Porengröße von 4 Å bis 5 Å gefüllt und mit einem primären oder sekundären Amin-Urethankettenverlängerer mit 2 oder mehr reaktionsfähigen funktionellen Gruppen in einer solchen Menge beladen ist, daß das geladene Amin rasch mit den Isocyanatgruppen des Präpolymeren reagiert.

2. Zweiteilige Polyurethanzusammensetzung nach Anspruch 1, worin das Molekularsieb zu mindestens 50 % seiner Kapazität mit Amin beladen ist.

3. Zweiteilige Polyurethanzusammensetzung nach Anspruch 2, worin das Molekularsieb zu mindestens 75 % seiner Kapazität mit Amin beladen ist.

4. Zweiteilige Polyurethanzusammensetzung nach Anspruch 2 oder 3, worin das Molekularsieb zu mindestens 90 % seiner Kapazität mit Amin beladen ist.

5. Zweiteilige Polyurethanzusammensetzung nach einem der Ansprüche 1 bis 4, worin Teil A und Teil B in nichtstöchiometrischen Anteilen vermischt sind.

6. Zweiteilige Polyurethanzusanmensetzung nach einem der Ansprüche 1 bis 5, worin der primäre oder sekundäre Amin-Urethankettenverlängerer mit 2 oder mehr reaktionsfähigen funktionellen Gruppen unter Ethylendiamin, Propylendiamin, Diethylentriamin und Triethylentetramin ausgewählt ist.

7. Zweiteilige Polyurethanzusammensetzung nach einem der Ansprüche 1 bis 6, worin sich das Präpolymer mit Isocyanatendgruppen von einem Polyesterpolyol, einem Polyetherpolyol, einem Polybutadienpolyol, einem Polyacrylatpolyol oder einem Polyisoprenpolyol ableitet.

8. Zweiteilige Polyurethanzusammensetzung nach einem der Ansprüche 1 bis 7, worin das Isocyanat unter 2,4- und 2,6-Toluylendiisocyanat, 4,4'-Diphenylenmethandiisocyanat, 4,4'-Dicyclohexylmethandiisocyanat und Isophorondiisocyanat ausgewählt ist.

## Revendications

1. Une composition de polyuréthane en deux parties réticulable chimiquement comprenant une partie A qui comprend un prépolymère avec des groupes isocyanates terminaux et qui est mélangée avec une partie B qui comprend de l'eau ou une composition contenant de l'eau, caractérisée en ce que la partie A est remplie avec un tamis moléculaire de taille de pores de 4 Å à 5 Å, exempt d'eau absorbée et chargé avec une amine primaire ou secondaire extenseur de chaine uréthane possédant deux fonctionnalités réactives ou davantage, en quantité telle que l'amine chargée réagit rapidement avec les groupes isocyanates du prépolymère.

2. Une composition de polyuréthane en deux parties selon la revendication 1, caractérisée en ce que le tamis moléculaire est chargé en amine à raison d'au moins 50 % de sa capacité.

3. Une composition de polyuréthane en deux parties selon la revendication 2, caractérisée en ce que le tamis moléculaire est chargé en amine à raison d'au moins 75 % de sa capacité.

4. Une composition de polyuréthane en deux parties selon la revendication 2 ou la revendication 3, caractérisée en ce que le tamis moléculaire est chargé en amine à raison d'au moins 90 % de sa capacité.

5. Une composition de polyuréthane en deux parties selon l'une des revendications 1 à 4, caractérisée en ce que la partie A et la partie B sont mélangées dans des proportions non-stoechiométriques.

6. Une composition polyuréthane en deux parties selon l'une des revendications 1 à 5, caractérisée en ce que l'amine primaire ou secondaire extendeur de chaine uréthane comprenant deux fonctionnalités réactives ou davantage est choisie parmi l'éthylène diamine, la propylène diamine, la diéthylène triamine et la triéthylène tétramine.

7. Une composition polyuréthane en deux parties selon l'une des revendications 1 à 6, caractérisée en ce que le prépolymère à groupes isocyanates terminaux est dérivé d'un polyester polyol, d'un polyéther polyol, d'un polybutadiene polyol, d'un polyacrylate polyol ou d'un polyisoprène polyol.

8. Une composition polyuréthane en deux parties selon l'une des revendications 1 à 7, caractérisée en ce que l'isocyanate est choisi parmi les 2,4- et 2,6-tolylène diisocyanates, le 4,4'-diphénylèneméthane diisocyanate le 4,4'-dicyclohexylméthane diisocyanate et l'isophorone diisocyanate.
